# EUROPÄISCHE PATENTANMELDUNG

(11) **EP 0 761 736 A2**
(43) Veröffentlichungstag der Anmeldung: **12.03.1997**
(21) Anmeldenummer: 96113452.5
(22) Anmeldetag: 22.08.1996
(51) Int. Cl.: C08K 5/3492, C08L 75/04

(54) **Verfahren zur Herstellung von flammwidrigen Polyurethan-Weichschaumstoffen**

(30) Priorität: 02.09.1995 DE 19532508
(71) Anmelder: BASF AKTIENGESELLSCHAFT, 67056 Ludwigshafen (DE)
(72) Erfinder: Chakrabarti, Sarbananda, 68169 Mannheim (DE); Fox, Stefan, 66693 Mettlach (DE); Schneider, Jürgen, Dr., 67251 Freinsheim (DE); Schmutzer, Klaus, 85235 Odelzhausen (DE)

(57) **Zusammenfassung**

Verfahren zur Herstellung von flammwidrigen Polyurethan-Weichschaumstoffen durch Umsetzung von
a) organischen und/oder modifizierten organischen Polyisocyanaten,
b) höhermolekularen Verbindungen mit mindestens zwei reaktiven Wasserstoffatomen und
c) gegebenenfalls niedermolekularen Kettenverlängerungsmitteln
   in Gegenwart von
d) Katalysatoren,
e) Treibmitteln,
f) Flammschutzmitteln
   sowie gegebenenfalls
g) Hilfsmittel und/oder Zusatzstoffen,
dadurch gekennzeichnet, daß als Flammschutzmittel f) Melamin in Verbindung mit mindestens einem anionenaktiven Dispergiermittel eingesetzt wird.

## Beschreibung

Die Herstellung von elastischen Polyurethan (PU)-Weichschaumstoffen ist bekannt und wird in zahlreichen Patent- und Literaturpublikationen beschrieben. Beispielhaft genannt seien das Kunststoff-Handbuch, Band VII, Polyurethane, Carl Hanser Verlag, München, 1. Auflage, 1966, herausgegeben von Dr. R. Vieweg und Dr. A. Höchtlen, und 2. Auflage, 1983, herausgegeben von Dr. G. Oertel sowie die Monographie "Integralschaumstoffe" von Dr. H. Piechota und Dr. H. Röhr, 1975, herausgegeben vom gleichen Verlag.

Zur Herstellung von PU-Weichschaumstoffen werden üblicherweise als Polyisocyanate handelsübliche Toluylen-diisocyanate, als polyfunktionelle höhermolekulare Verbindungen Polyoxyalkylenpolyole auf der Grundlage von 1,2-Propylenoxid und/oder Ethylenoxid sowie Mischungen aus derartigen Polyoxyalkylen-polyolen und Pfropf-polyoxyalkylen-polyolen und als Kettenverlängerungsmittel Alkandiol oder hydroxyl-und/oder aminogruppenhaltige Verbindungen mit einer Funktionalität größer als 2, wie z.B. Glycerin, Trimethylolpropan oder Alkanolamine verwendet.

Derartige PU-Weichschaumstoffe sind nicht flammwidrig; nachteilig ist insbesondere ihre leichte Entflammbarkeit. Zur Verminderung dieses Nachteils werden den schaumfähigen PU-Mischungen Flammschutzmittel, vorzugsweise halogen- und/oder phosphorhaltige Verbindungen, einverleibt. Der Zusatz dieser Produkte wirkt sich jedoch vielfach negativ auf die mechanischen Eigenschaften der erhaltenen PU-Schaumstoffe aus. Es hat daher nicht an Versuchen gefehlt, neue Flammschutzmittel zu entwickeln und die halogen- und/oder phosphorhaltigen Verbindungen ganz oder zumindest teilweise in PU-Schaumstoffen durch diese zu ersetzen.

Als hierfür geeignete Verbindung wird beispielsweise das bei 354°C schmelzende, polyfunktionelle Melamin genannt. Nach Angaben der DE-A-23 48 838 wird das Melamin in der Polyol- und/oder der Polyisocyanatkomponente suspendiert und die erhaltene Suspension sofort zu isocyanuratgruppenhaltigen, flammfesten PU-Kunststoffen verarbeitet. Nichtentflammbare PU-Hartschaumstoffe werden gemäß US-A-4 221 875 (DE-A-28 09 084) durch Umsetzung von organischen Polyisocyanaten und Polyoxyalkylen-polyolen in Gegenwart von Treibmitteln und Silikonen als oberflächenaktiver Zusatzstoff sowie 20 bis 100 Gew. -Teilen Melamin als Flammschutzmittel pro 100 Gew.-Teilen Polyoxyalkylen-polyol erhalten.

Die EP-A-0 004 618 (US-A-4 258 141) beschreibt ein Verfahren zur Herstellung von schwerentflammbaren PU-Weichschaumstoffen unter Verwendung einer Mischung aus Diphenylmethan-diisocyanaten und Polyphenyl-polmethylen-polyisocyanaten (Roh-MDI) mit einem Gehalt an Diphenylmethan-diisocyanat-Isomeren von 40 bis 90 Gew.%, bezogen auf das Gesamtgewicht, als Polyisocyanate und Cyansäurederivaten, insbesondere Melamin, als Flammschutzmittel.

Obwohl nach diesen Verfahren die Flammwidrigkeit der PU-Schaumstoffe bedeutend verbessert werden konnte, muß auch hier die starke Sedimentation des Melamins im Polyol, die bereits nach kurzer Lagerzeit auftritt, als nachteilig angesehen werden. Zur Überwindung dieses Nachteils werden in der EP-B-023 987 (US-A-4 293 657) stabile Melamin-Polyol-Dispersionen beschrieben, bei denen das Melamin in situ in dem Polyol in Gegenwart mindestens eines Stabilisators mit einer örtlichen Energiedichte von 10 bis 3000 kW/m³ auf eine Teilchengröße von kleiner als 10 µm zerkleinert wird. Diese zusätzliche Verfahrensmaßnahme ist apparativ aufwendig und kostenintensiv.

Es wurde außerdem versucht, durch geeignete Zusatzstoffe die Verarbeitbarkeit von Melamin enthaltenden PU-Formulierungen zu verbessern, ohne die Flammwidrigkeit der enthaltenden Schaumstoffe zu reduzieren. Nach Angaben der DE-A-35 30 519 (GB-A-21 63 762A) wird als flammhemmendes Additiv eine Mischung aus Melamin und einem Additionsprodukt aus Alkanolamin und Isocyanat, die in einem Polyol dispergiert wird, verwendet. Die GB-A-21 77 405A und 2177 405A beschriebenen Mischungen aus Melamin und Styrol-Acrylnitril-Pfropf-polyoxypropylen-polyoxyethylen-polyolen, dispergiert in üblichen Polyoxypropylenpolyoxyethylen-polyolen, sowie gegebenenfalls phosphor- und/oder halogenhaltigen Verbindungen als Flammschutzadditiv. Nach diesen Verfahren hergestellte Schaumstoffe zeigen zwar eine gute Flammbeständigkeit, ihre mechanischen Eigenschaften genügen jedoch vielfach nicht den gestellten Anforderungen. Nachteilig ist ferner, daß die Formulierungen in Mehrkomponenten-Mischvorrichtungen verarbeitet werden müssen, da die Melamin enthaltende Komponente nicht ausreichend lagerstabil ist.

In EP-B-439 719 werden stabile Melaminzubereitungen aus Melamin, Cyanursäure, Chloriden oder Bromiden der Cyanursäure oder der Isocyanursäure, Ammelin (2,4 Diamino-6-Hydroxy-1,3,5-Triazin) oder Ammelid (2-Amino-4,6-Dihydroxy-1,3,5-Triazin) beschrieben.

EP-A-391 116 beschreibt Dispersionen aus Melamin und gegebenenfalls substituierten Harnstoff, Thioharnstoff oder Biuret in Polyetherolen.

In EP-A-492 139 werden Mikrokapseln aus in Kunststoff eingekapseltem Melamin zur flammhemmenden Ausrüstung von Kunststoffen beschrieben.

In EP-A-377 868 werden spezielle Polyolkombinationen zur Stabilisierung von Melamin enthaltenden Polyolkomponenten vorgeschlagen.

In EP-A-377 891 werden Melamin-Polyetherpolyol-Dispersionen aus Melamin, Hexandiol-1,6 und/oder Trimethylolpropan und mindestens einen Polyetherpolyol, in EP-A-482 507 Melamin-Blähgraphit-Polyetherpolyol-Dispersionen beschrieben.

Den im Stand der Technik beschriebenen Verfahren ist gemeinsam, daß die dort beschriebenen Dispergierhilfsmittel sich zum Teil nachteilig auf die Schaumeigenschaften auswirken und eine zufriedenstellende Dispersionsstabilität nicht in jedem Fall erreicht wird.

Die Aufgabe der Erfindung bestand darin, ein Verfahren zur Herstellung von flammfesten Polyurethan-Weichschaumstoffen zu entwickeln, bei dem als Flammschutzmittel Melamin eingesetzt wird und das Melamin stabil in der Polyolkomponente dispergiert ist, ohne daß es durch die Art der Dispergierung zu Nachteilen bei der Verarbeitung und den Schaumeigenschaften kommt.

Erfindungsgemäß wird die Aufgabe gelöst, indem das Melamin gemeinsam mit mindestens einem anionenaktiven Dispergiermittel in der Polyolkomponente vorliegt.

In einer bevorzugten Ausführungsform der Erfindung wird zusätzlich zu dem anionenaktiven Dispergiermittel noch mindestens eine organische Säure und/oder mindestens ein Ester einer organischen Säure zugegeben.

Gegenstand der Erfindung ist demzufolge ein Verfahren zur Herstellung von flammwidrigen Polyurethan-Weichschaumstoffen durch Umsetzung von
a) organischen und/oder modifizierten organischen Polyisocyanaten
b) höhermolekularen Verbindungen mit mindestens zwei reaktiven Wasserstoffatomen und
c) gegebenenfalls niedermolekularen Kettenverlängerungsmitteln
   in Gegenwart von
d) Katalysatoren,
e) Treibmitteln,
f) Flammschutzmitteln,
   sowie gegebenenfalls
g) Hilfsmitteln und/oder Zusatzstoffen,
dadurch gekennzeichnet, daß als Flammschutzmittel (f) Melamin in Verbindung mit mindestens einem anionenaktiven Dispergiermittel eingesetzt wird.

Das erfindungsgemäß als Flammschutzmittel eingesetzte Melamin kann in handelsüblicher Form eingesetzt werden. Üblicherweise weisen diese Produkte folgende Korngrößenverteilung auf:
10 Gew.-% der Teilchen sind größer als 30 µm
30 Gew.-% der Teilchen sind größer als 24 µm
50 Gew.-% der Teilchen sind größer als 20 µm
70 Gew.-% der Teilchen sind größer als 16 µm
90 Gew.-% der Teilchen sind größer als 11 µm

Besonders bewährt hat sich und daher vorzugsweise eingesetzt wird Melamin mit einer durchschnittlichen Korngröße von 20 bis 50 µm und einem Schüttgewicht von 300 bis 800 g/Liter, insbesondere von 500 bis 650 g/Liter. Das Melamin kommt zweckmäßigerweise in einer Menge von 5 bis 50 Gew.-% und insbesondere von 10 bis 40 Gew.-% und besonders bevorzugt von 10 bis 20 Gew.-%, bezogen auf die Komponente b), zur Anwendung.

Zweckmäßigerweise wird ausschließlich Melamin als Flammschutzmittel verwendet. Es kann jedoch auch vorteilhaft sein, zur Erzielung spezieller Effekte, wie z.B. Homogenisierung und Stabilisierung der Ausgangskomponentengemische, Reduzierung der Rauchentwicklung im Brandfalle, gezielte Verbesserung von mechanischen Eigenschaften der herstellten PU-Schaumstoffe u.a., das Melamin mit anderen üblichen organischen oder anorganischen Flammschutzmitteln zu kombinieren, beispielsweise mit Stärke, zweckmäßigerweise ausgewählt aus der Gruppe der Mais-, Reis-, Kartoffel- oder weizenstärke oder Mischungen davon sowie gegebenenfalls chemisch modifizierten Stärkederivaten, und/oder Flammschutzmitteln aus der Gruppe Trikresylphosphat, Tris-(2-chlor-ethyl)-phosphat, Tris-(2-chlorpropyl)-phosphat, Tris-(1,3-dichlorpropyl)-phosphat, Tris-(2,3-dibrompropyl)-phosphat, Tetrakis-(2-chlorethyl)-ethylendiphosphat, Aluminiumoxidhydrat, Ammoniumsulfat, der Ammoniumphosphate und Ammoniumpolyphosphate.

Als anionenaktive Dispergiermittel kommen insbesondere solche mit mindestens einer Sulfonat- oder Sulfatgruppe im Molekül zum Einsatz.

Besonders geeignet sind Diphenyloxid-Disulfonate mit linearen oder verzweigten C₆- bis C₁₆-Alkylresten, wie sie unter der Bezeichnung Dowfax®, Firma Dow Chemical Comp., angeboten werden.

Weitere besonders geeignete Verbindungen sind sulfatierte Alkylphenylethoxylate bzw. deren Alkalisalze. Sehr gut geeignet ist das Oktylphenolethylsulfat und dessen Natriumsalz, das unter der Bezeichnung Emulphor® OPS 25 von der BASF AG angeboten wird.

In einer besonders vorteilhaften Ausführungsform der Erfindung wird zusätzlich noch mindestens eine organische Säure und/oder deren Ester, insbesonders Alkylester, zugesetzt.

Besonders geeignet sind 2- bis 3-wertige Carbonsäuren bzw. deren Ester, insbesondere solche, ausgewählt aus der Gruppe enthaltend Malonsäures, Oxalsäure, Milchsäure und deren C₁⁻ bis C₄-Alkylester.

Die anionenaktiven Dispergiermittel werden in einer Menge von 0,1 bis 2 Gew.-%, vorzugsweise 0,5 bis 2 Gew.-%, insbesondere 0,5 bis 1 Gew.-%, jeweils bezogen auf b) bis g), eingesetzt.

Die organischen Säuren und/oder Ester kommen in einer Menge von 0,001 bis 0,1 Gew.-%, insbesondere 0,03 bis 0,07 Gew.-%, bezogen auf b) bis g), zum Einsatz.

Bei einer zu geringen Konzentration der anionenaktiven Dispergiermittel kommt es zu einem vorzeitigen Absetzen des Melamins, bei einem zu hohen Gehalt kann es zu Störungen der Schaumstruktur, insbesondere zu einer unerwünschten Geschlossenzelligkeit, kommen.

Bei einem zu hohen Gehalt an organischen Säuren kann es zu Störungen der Katalyse kommen.

Besonders stabile Melamin enthaltende Polyolkomponenten werden erreicht, wenn 10 bis 20 Gew.-% Melamin, je 0,3 bis 0,6 Gew.-% eines Diphenyloxid-Disulfonates mit einem C₆- bis C₁₆-Alkylrest und eines sulfatierten Alkylphenylethoxylates und 0,03 bis 0,06 Gew.-%, jeweils bezogen auf b), einer organischen Säure und/oder eines Esters einer organischen Säure in b) enthalten sind.

Insbesondere bei wasserhaltigen Polyolkomponenten sollte mit einem Säure- und/oder Esterzusatz gearbeitet werden. Bei den erfindungsgemäß eingesetzten Kombinationen aus Melamin, den anionenaktiven Dispergiermitteln und gegebenenfalls organischen Säuren und/oder Estern kommt es in der Polyolkomponente nur zu einem sehr geringen Absetzen des Melamins. Die Polyolkomponente war bis zu einem Monat ohne Absetzungen von Melamin haltbar.

Das sonst notwendige Aufrühren der Polyolkomponente vor der Verarbeitung war nicht erforderlich, und es traten auch keine Absetzungen von Melamin in den Fässern und Maschinenbehältern auf.

Überraschenderweise traten auch keinerlei Nachteile bei den Schaumeigenschaften der nach dem erfindungsgemäßen Verfahren hergestellten Weichschäume auf. Im Gegenteil, die so hergestellten Formteile wiesen eine verbesserte Schaumoberfläche, eine homogene Dichtverteilung im Kissen sowie eine verbesserte Entformbarkeit auf. Der Flammtest nach DIN 5510, Teil 2, wurde erfüllt.

Der Einsatz der erfindungsgemäß hergestellten Polyurethan-Weichschäume erfolgt vorzugsweise für Sitzkissen in Fahrzeuginnenräumen.

Zu den für das erfindungsgemäße Verfahren verwendbaren Ausgangskomponenten ist folgendes auszuführen:
a) Zur Herstellung der flammwidrigen, elastischen PU-Weichschaumstoffe, vorzugsweise der PU-Weichformschaumstoffe eignen sich die bekannten organischen, z.B. aliphatischen, cycloaliphatischen, araliphatischen, cycloaliphatisch-aromatischen und vorzugsweise aromatischen Di- und/oder Polyisocyanate. Im einzelnen seien als aromatische Polyisocyanate beispielhaft genannt: Mischungen aus MDI-Isomeren und Polyphenyl-polymethylen-polyisocyanaten, sogenanntes Roh-MDI,mit einem Gehalt an MDI-Isomeren von mindestens 50 Gew.-%, vorzugsweise von 60 bis 90 Gew.-% und mehr, bezogen auf das Gesamtgewicht der Mischung, 2,4- und 2,6-Toluylen-diisocyanat sowie die entsprechenden handelsüblichen Isomerenmischungen, Mischungen aus Toluylen-diisocyanaten und MDI und/oder Roh-MDI, beispielsweise solchen mit einem MDI-Gehalt von 30 bis 90 Gew.-%, vorzugsweise 40 bis 80 Gew.-%, bezogen auf das Gesamtgewicht des Roh-MDI's.
   Geeignet sind auch sogenannte modifizierte mehrwertige Isocyanate, d.h. Produkte, die durch chemische Umsetzung organischer Di- und/oder Polyisocyanate erhalten werden. Beispielhaft genannt seien Ester-, Harnstoff-, Biuret-, Allophanat-, Isocyanurat- und vorzugsweise Carbodiimid-, Uretonimin- und/oder Urethangruppen enthaltende Di- und/oder Polyisocyanate. Im einzelnen kommen beispielsweise in Betracht: Urethangruppen enthaltende Prepolymere mit einem NCO-Gehalt von 14 bis 2,8 Gew.-% vorzugsweise von 12 bis 3,5 Gew.-% oder Quasiprepolymere mit einem NCO-Gehalt von 35 bis 14 Gew.-%, vorzugsweise von 34 bis 22 Gew.-% wobei mit Urethangruppen modifizierte Polyisocyanate aus Toluylen-diisocyanaten, insbesondere einem NCO-Gehalt von 34 bis 28 Gew.-% und solche aus 4,4'-MDI, 4,4'- und 2,4'-MDI-Isomerenmischungen oder Roh-MDI, insbesondere einen NCO-Gehalt von 28 bis 22 Gew.-%, bezogen auf das Gesamtgewicht, aufweisen und hergestellt werden durch Umsetzung von Diolen, Oxalkylen-glykolen und/oder Polyoxyalkylen-glykolen mit Molekulargewichten von 62 bis 6000, vorzugsweise von 134,18 bis 4200 mit Toluylen-diisocyanaten, 4,4'-MDI, MDI-Isomerengemischen und/oder Roh-MDI z.B. bei Temperaturen von 20 bis 110°C, vorzugsweise von 50 bis 90°C, wobei als Oxalkylen- und Polyoxyalkylen-glykole, die einzeln oder als Gemisch eingesetzt werden können, beispielhaft genannt seien: Diethylen-, Dipropylen-, Polyoxyethylen-, Polyoxypropylen- und Polyoxypropylen-polyoxyethylen-glykole, Carbodiimidgruppen und/oder Isocyanuratgruppen enthaltende Polyisocyanate, z.B. auf MDI-Isomeren- und/oder Toluylen-diisocyanat-Basis.
   Besonders bewährt haben sich jedoch und daher vorzugsweise Anwendung finden Toluylen-diisocyanat-2,4, Toluylendiisocyanat-2,6, Mischungen aus Toluylen-diisocyanat-2,4 und -2,6 und Urethangruppen enthaltende Polyisocyanate mit einem NCO-Gehalt von 34 bis 28 Gew.-%, besonders bevorzugt 34 bis 30 Gew.-%, hergestellt aus 2,4- und 2,6-Toluylen-diisocyanat-Gemischen, zweckmäßigerweise im Gewichtsverhältnis von 80:20, und Polyoxypropylen-polyoxyethylen-glykolen mit einem Molekulargewicht von 2800 bis 4200.
b) Als höhermolekulare Verbindungen mit reaktiven Wasserstoffatomen (b) kommen in Betracht solche mit einer durchschnittlichen Funktionalität von 2 bis 4 und einem durchschnittlichen Molekulargewicht von 2200 bis 8000.
   Hierfür geeignete Polyoxyalkylen-polyole mit einer Funktionalität von durchschnittlich 2 bis 4, insbesondere 2,0 bis 2,4 und einem durchschnittlichen Molekulargewicht von 250 bis 8000, insbesondere von 3600 bis 6500, können nach bekannten Verfahren beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Bortrifluorid-Etherat u.a. oder Bleicherde als Katalysatoren aus einem oder mehreren Alkylenoxiden mit 2 bis 4 Kohlenstoffatomen im Alkylenrest und einem Startermolekül, das 2 bis 4, vorzugsweise 2 bis 3, reaktive Wasserstoffatome gebunden enthält, hergestellt werden.
   Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie z.B. Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und diakylsubstituiertes Ethylendiamin, Diethylentriamin, Triethylentetramin 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan.
   Als Startermoleküle kommen ferner in Betracht: Alkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan und Pentaerythrit.
   Die Polyoxyalkylen-polyole können einzeln oder in Form von Mischungen verwendet werden, wobei solche Produkte bevorzugt sind, die sowohl Ethylenoxid- als auch 1,2-Propylenoxideinheiten in der Oxalkylenkette gebunden enthalten, wobei diese entweder statistisch oder blockweise angeordnet sein können. Insbesondere eingesetzt werden Polyoxypropylenpolyoxyethylen-polyole mit mehr als 50 % endständigen primären Hydroxylgruppen einer Funktionalität von 2 bis 3 und einem Molekulargewicht von 3600 bis 6500, Polyoxytetramethylen-glykole, zweckmäßigerweise solchen mit Molekulargewichten von 250 bis 3000, vorzugsweise 800 bis 2200 oder Mischungen aus den genannten Polyolen.
   Als polymermodifizierte Polyoxyalkylen-polyole, sogenannte Polymerpolyole, mit einer durchschnittlichen Funktionalität von vorzugsweise 2 bis 4, insbesondere von 2 bis 3 und einem durchschnittlichen Molekulargewicht von vorzugsweise 1200 bis 8000, insbesondere von 2200 bis 6500 finden bevorzugt Pfropfpolyoxyalkylen-polyole Verwendung. Diese können hergestellt werden durch in situ Polymerisation von olefinisch ungesättigten Monomeren oder -gemischen, wie z.B. Styrol, Acrylnitril oder vorzugsweise Styrol-Acrylnitrilmischungen, in Polyoxyalkylen-polyolen, z.B. den oben beschriebenen Polyoxyalkylen-polyolen, analog den Angaben der deutschen Patentschriften Nrs. 11 11 394, 12 22 669 (US 3 304 273, 3 383 351, 3 523 093) , 11 52 536 (GB 1 040 452) und 11 52 537 (GB 987 618) oder durch Dispergieren von Pfropf-polymeren, die zuvor durch radikalische Polymerisation in Lösungsmitteln hergestellt wurden, in Polyoxyalkylen-polyolen analog den Angaben der US-Patentschriften 3 391 092, 4 014 846, 4 093 573. Zur Herstellung der Pfropf-polyoxyalkylen-polyole, eignen sich sowohl die obengenannten gesättigten Polyoxyalkylen-polyole, die gemäß US Reissue Patent Nr. 28 715 im wesentlichen frei sind von ethylenisch ungesättigten Einheiten als auch olefinisch ungesättigte Polyoxyalkylen-polyole wie sie z.B. in der US Patentschrift 3 652 659 und im US Reissue Patent 29 014 beschrieben werden. Als Polymer-modifizierte Polyoxyalkylen-polyole eignen sich ferner Polyharnstoff-, Polyhydrazid- oder tert. Aminogruppen gebunden enthaltende Polyurethan-Polyoxyalkylen-polyol-Dispersionen, wie sie beispielsweise beschrieben werden in der EP-B-0 011 752 (US 4 304 708), US-A-4 374 209 und DE-A-32 31 497. Die polymermodifizierten Polyoxyalkylen-polyole, die zweckmäßigerweise 2 bis 35 Gew.-%, vorzugsweise 3 bis 25 Gew.-%, bezogen auf das Gesamtgewicht, Polymerpartikel besitzen, können ebenso wie die Polyoxyalkylen-polyole und die Polyoxyalkylen-polyamine einzeln oder in Form von Mischungen verwendet werden.
   Als Polyoxyalkylen-polyamine, vorzugsweise mit einer Funktionalität von durchschnittlich 2 bis 4, insbesondere von 2 bis 3 und einem durchschnittlichen Molekulargewicht von vorzugsweise 1800 bis 8000, insbesondere von 2500 bis 6500 kommen zweckmäßigerweise solche in Betracht, deren Aminogruppen an aliphatische Reste gebunden sind und die zu mindestens 70 %, vorzugsweise zu mehr als 90 % aus primären Aminogruppen bestehen.
   Die erfindungsgemäß vorzugsweise zur Anwendung kommenden Polyoxyalkylen-polyamine mit an aliphatische Reste gebundenen Aminogruppen können nach bekannten Verfahren, beispielsweise durch Cyanoalkylierung der beschriebenen Polyoxyalkylen-polyole und anschließende Hydrierung des gebildeten Nitrils (US 3 257 050) oder durch Aminierung von Polyoxyalkylen-polyolen mit Ammoniak in Gegenwart von Wasserstoff und Katalysatoren (DE-A-12 15 373) hergestellt werden.
c) Gegebenenfalls kann es zur Modifikation der mechanischen Eigenschaften der flammwidrigen, elastischen PU-Weichschaum-stoffe, insbesondere Weichformschaumstoffe, zweckmäßig sein, neben der Komponente (b) zu ihrer Herstellung zusätzlich niedermolekulare Kettenverlängerungsmittel (c) mitzuverwenden. Als derartige Mittel kommen polyfunktionelle, insbesondere di- und trifunktionelle Verbindungen mit Molekulargewichten von 17 bis ungefähr 400, vorzugsweise von 62 bis ungefähr 300 in Betracht. Verwendet werden beispielsweise Di- und/oder Trialkanolamine, wie z.B. Diethanolamin und Triethanolamin, aliphatische Diole und/oder Triole mit 2 bis 6 Kohlenstoffatomen im Alkylenrest, wie z.B. Ethan-, 1,4-Butan-, 1,5-Pentan-, 1,6-Hexandiol, Glycerin und/oder Trimethylolpropan und niedermolekulare Ethyxylierungs- und/oder Propoxylierungsprodukte, hergestellt aus den vorgenannten Di-, Trialkanolaminen, Diolen und/oder Triolen sowie aliphatischen und/oder aromatischen Diaminen wie z.B. 1,2-Ethan-, 1,4-Butan-, 1,6-Hexandiamin, 2,4- und/oder 2,6-Toluylen-diamin, 4,4'-Diamino-diphenylmethanen als Startermolkülen und Alkylenoxid oder -gemischen.
   Als Kettenverlängerungsmittel (c) vorzugsweise eingesetzt werden Dialkanolamine, Diole und/oder Triole und insbesondere Hexandiol-1,6, Diethanolamin, Trimethylolpropan und Glycerin oder Mischungen davon.
   Die Kettenverlängerungsmittel, die vorzugsweise zur Herstellung der PU-Weichschaumstoffe mitverwendet werden, kommen zweckmäßigerweise in solchen Gewichtsmengen zur Anwendung, daß pro Mol höhermolekularer Verbindung (b) 0,01 bis 8 Mole, insbesondere 0,1 bis 3 Mole Kettenverlängerungsmittel (c) in der Reaktionsmischung vorliegen.
d) Zur Beschleunigung der Umsetzung zwischen der Komponente (b), Wasser als Treibmittel (e) und gegebenenfalls Kettenverlängerungsmittel (c) und den organischen Polyisocyanaten und/oder modifizierten Polyisocyanaten (a) werden der Reaktionsmischung übliche Polyurethankatalysatoren einverleibt. Vorzugsweise verwendet werden basische Polyurethankatalysatoren, beispielsweise tertiäre Amine, wie Dimethylbenzylamin, Dicyclohexylmethylamin, Dimethylcyclohexylamin, N,N,N',N'-Tetramethyldiaminio-diethylether` Bis-(dimethylaminopropyl)-harnstoff, N-Methyl- bzw. N-Ethylmorpholin, dimethylpiperazin, N-Dimethylaminoethylpiperidin, 1,2-Dime-thyllimidazol, 1-Azabicyclo-(2,2,0)-octan, Dimethylaminoethanol, 2-(N,N-Dimethylaminoethoxy))ethanol, N,N',N''-Tris-(dialkylaminoalkyl)-hexahydrotriazin, z.B. N, N',N''-Tris-(dimethylaminopropyl)-s-hexahydrotriazin und insbesondere Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen. Eingesetzt werden zweckmäßigerweise 0,1 bis 10 Gew.-%, vorzugsweise 0,3 bis 3 Gew.-% Katalysator auf Basis tertiärer Amine und/oder 0,01 bis 0,5 Gew.-%, vorzugsweise 0,03 bis 0,25 Gew.-% Metallsalze, bezogen auf das Gewicht der Komponente (b).
e) Zu Treibmitteln (e), welche zur Herstellung der PU-Weichschaumstoffe verwendet werden können, gehört vorzugsweise Wasser, das mit Isocyanatgruppen unter Bildung von Kohlendioxid reagiert. Die Wassermengen, die zweckmäßigerweise eingesetzt werden, betragen 0,1 bis 5 Gew.-Teile, vorzugsweise 1,0 bis 3,5 Gew.-Teile und insbesondere 2,5 bis 3,0 Gew.-Teile, bezogen auf 100 Gew.-Teile der Komponente (b).
   Im Gemisch mit Wasser können auch physikalisch wirkende Treibmittel eingesetzt werden. Geeignet sind Flüssigkeiten, welche gegenüber den organischen, gegebenenfalls modifizierten Polyisocyanaten (a) inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie Pentan, n- und iso-Butan und Propan, Ether, wie Dimethylether und Diethylether, Ketone, wie Aceton und Methylethylketon, Ethylacetat und vorzugsweise halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemsiche dieser niedrigsiedenden Flüssigkeiten untereinander und/oder mit anderen substituierten oder unsubstituierten Kohlenwasserstoffen können verwendet werden.
   Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 25 Gew.-Teile, vorzugsweise 0 bis 15 Gew.-Teile pro 100 Gew.-Teile, der Komponente (b). Gegebenenfalls kann es zweckmäßig sein, die gegebenenfalls modifizierten Polyisocyanate (a) mit dem physikalisch wirkenden Treibmittel zu mischen und dadurch die Viskosität zu verringern.
f) Als Flammschutzmittel werden die oben beschriebenen Verbindungen, gegebenenfalls im Gemisch mit anderen bekannten Flammschutzmitteln, eingesetzt.
g) Der Reaktionsmischung können auch noch Hilfsmittel und/oder Zusatzstoffe (g) einverleibt werden. Genannt seien beispielsweise oberflächenaktive Stoffe, Stabilisatoren, Hydrolyseschutzmittel, Porenregler, fungistatisch und bakteriostatisch wirkende Substanzen, Farbstoffe, Pigmente und Füllstoffe.
   In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, oxethylierte Alkylphenole, oxethylierte Fettalkohole, Paraffinöle, Rizinusöl- bzw. Rizinolsäureester und Türkischrotöl, die in Mengen von 0,05 bis 5 Gew.-Teilen, vorzugsweise 0,1 bis 2 Gew.-Teilen, pro 100 Gew.-Teilen der Ausgangskomponente (b) angewandt werden.
   Nähere Angaben über die oben genannten anderen üblichen Hilfs- und Zusatzstoffe sind der Fachliteratur, beispielsweise der Monographie von J.H. Saunders und K.C. Frisch "High Polymers", Band XVI, Polyurethanes, Teil 1 und 2, Verlag Interscience Publishers, 1962 bzw. 1964 oder dem Kunststoff-Handbuch, Polyurethane, Band VII, Hanser-Verlag, München, Wien, 1. und 2. Auflage, 1966 und 1983 zu entnehmen.

Zur Herstellung der PU-Weichschaumstoffe werden die organischen, gegebenenfalls modifizierten Polyisocyanate (a), die höhermolekularen Verbindungen mit mindestens zwei reaktiven Wasserstoffatomen (b) und gegebenenfalls Kettenverlängerungsmittel (c) in Gegenwart von Katalysatoren (d), Treibmitteln (e), Flammschutzmittel (f) und gegebenenfalls Hilfsmitteln und/oder Zusatzstoffen (g) bei Temperaturen von 0 bis 100°C, vorzugsweise 15 bis 80°C in solchen Mengenverhältnissen zur Reaktion gebracht, daß pro NCO-Gruppe 0,5 bis 2, vorzugsweise 0,8 bis 1,3 und insbesondere ungefähr ein reaktive(s) Wassterstoffatom(e) gebunden an die Ausgangskomponenten (b) und gegebenenfalls (c) vorliegen.

Die PU-Weichschaumstoffe werden zweckmäßigerweise nach dem one shot-Verfahren durch Vermischung von zwei Komponenten A und B hergestellt, wobei die Ausgangskomponenten (b), (d), (e), (f) und gegebenenfalls (c) und (g) zu der sogenannten A-Komponente vereinigt und als B-Komponente die Ausgangskomponente (a) gegenenfalls im Gemisch mit (f), (g) und inerten, physikalisch wirkenden Treibmitteln verwendet werden. Da die A-Komponente mindestens 6 Monate lagerstabil ist, müssen die A- und B-Komponente vor Herstellung der PU-Weichschaumstoffe nur noch intensiv gemischt werden. Die Reaktionsmischung kann in offenen oder geschlossenen Formwerkzeugen verschäumt werden; sie eignet sich ferner zur Herstellung von Blockschaumstoffen.

Wie bereits dargelegt wurde, findet das erfindungsgemäße Verfahren vorzugsweise Anwendung zur Herstellung von PU-Weichschaumstoffen. Die Reaktionsmischung wird hierzu mit einer Temperatur von 15 bis 80°C, vorzugsweise 30 bis 65°C in ein zweckmäßigerweise metallisches temperierbares Formwerkzeug eingebracht. Die Formwerkzeugtemperatur beträgt üblicherweise 20 bis 90°C, vorzugsweise 35 bis 70°C. Die Reaktionsmischung läßt man unter Verdichtung, z.B. bei Verdichtungsgraden von 1,1 bis 8, vorzugsweise 2 bis 6 und insbesondere 2,2 bis 4, in dem geschlossenen Formwerkzeug aushärten.

Die nach dem erfindungsgemäßen Verfahren hergestellten PU-Weichschaumstoffe besitzen Dichten von 35 bis 120 g/Liter, vorzugsweise 40 bis 80 g/Liter. Sie sind gut flammwidrig, wobei sie den Korrosinbrennertest (FAR 25.853(c)) bestehen und weisen ein gutes mechanisches Eigenschaftsniveau auf. Die Formschaumstoffe finden vorzugsweise Verwendung als Polsterelemente z.B. als Sitzpolster, Armlehnen, Kopfstützen, Sonnenblenden und Sicherheitsabdeckungen in Fahrzeugkabinen.

Die Erfindung soll an nachstehenden Beispielen näher erläutert werden.

### Beipiele

In einer Polyolkomponente, bestehend aus
61,7 Gew.-Teilen eines Polyetherpolyols mit eine Hydroxylzahl von 35 mg KOH/g und einem Molgewicht M_{w} von ca. 4500,
5,0 Gew.-Teilen eines Polymerpolyols mit einer Hydroxylzahl von 28 mg KOH/g und einem Molgewicht M_{w} von ca. 4300,
0,2 Gew.-Teilen Diethanolamin,
0,2 Gew.-Teilen des Silikonstabilisators B 8680 der Fa. Goldschmidt,
0,2 Gew.-Teilen des tertiären Aminkatalysators Dabco 33 LV der Fa. Airproducts,
0,5 Gew.-Teilen des säureblockierten Aminkatalysators Toyocat SF2 der Fa. Tosho,
2,2 Gew.-Teilen Wasser,
5,0 Gew.-Teilen Trichloropropylphosphat und
25 Gew.-Teilen Melamin,
wurden die in der Tabelle aufgeführten Zusatzmittel dosiert und die Mischung mit einem Rührer mit ca. 1300 min⁻¹ homogenisiert.

Ein Teil der Polyolkomponente wurde unmittelbar danach abgenommen, in ein verschlossenes Glas gefüllt und das Absetzverhalten bestimmt. Die Ergebnisse sind in der Tabelle festgehalten.

100 Gewichtsteile der homogenisierten Polyolkomponente wurden mit 34 Gewichtsteilen eines Prepolymeren aus einem Polyetherpolyol der Funktionalität 2 mit einer OH-Zahl von 250 mg KOH/g, Dipropylenglykol und Diphenylmethan-diisocyanat mit einem NCO-Gehalt von 28 Gew.-% umgesetzt. Die Reaktionsmischung hatte eine Startzeit von 9 - 10 Sekunden und eine Steigzeit von 86 - 90 Sekunden.

Die Schäume hatten eine Rohdichte von ca. 80g/l.

Die Einsatzstoffe und die Ergebnisse sind in der Tabelle 1 festgehalten.

**Tabelle 1**

| **Beispiel** | **Zusatzmittel** | **Konz.** | **Absetzverhalten in [%]******** **nach Tagen** | | | | | |
|---|---|---|---|---|---|---|---|---|
| | | **[Gew.-%]******* | **1** | **3** | **10** | **15** | **20** | **30** |
| 1 (Vergleich) | keine | 0 | 50 | - | - | - | - | - |
| 2 | Emulphor OPS 25 | 0,5-2,0 | 0 | 2 | 8 | | | |
| 3 | Dowfax 3B2 | 0,5 | 0 | 0 | 5 | 8 | 15 | 25 |
| | Emulphor OPS 25 | 0,5 | | | | | | |
| 4 | Dowfax 3B2 | 0,5 | 0 | 0 | 0 | 3 | 5 | 5 |
| | Emulphor OPS 25 | 0,5 | | | | | | |
| | Malonsäure | 0,05 | | | | | | |
| 5 | Dowfax 3B2 | 0,5 | 0 | 1 | 13 | 20 | - | - |
| | Emulphor OPS 25 | 0,5 | | | | | | |
| | Oxalsäure | 0,05 | | | | | | |
| 6 | Dowfax 3B2 | 0,5 | 0 | 1 | 10 | 15 | - | - |
| | Emulphor OPS 25 | 0,5 | | | | | | |
| | Malonsr.-diethylester | 0,05 | | | | | | |

| | | | | | | | | |
|---|---|---|---|---|---|---|---|---|
| * bezogen auf die Polyolkomponente | | | | | | | | |
| ** bezogen auf die Melaminmenge | | | | | | | | |

Die physikalischen Eigenschaften der PU-Weichschaumstoffe sind in Tabelle 2 dargestellt.

**Tabelle 2**

| Formulierung | Index | Dichte [g/l] | Zugfestigkeit [kPa] | Dehnung [%] | Eindruckhärte [N] | Flammtest*** |
|---|---|---|---|---|---|---|
| ohne Dispergiermittel (Beispiel 1) | 100 | 65 | 111 | 90 | 490 | erfüllt |
| mit Dispergiermittel (Beispiel 4) | 100 | 67 | 115 | 92 | 480 | erfüllt |

| | | | | | | |
|---|---|---|---|---|---|---|
| *** Flammtest nach DIN 5510, Teil 2 | | | | | | |

## Patentansprüche

1. Verfahren zur Herstellung von flammwidrigen PolyurethanWeichschaumstoffen durch Umsetzung von
a) organischen und/oder modifizierten organischen Polyisocyanaten,
b) höhermolekularen Verbindungen mit mindestens zwei reaktiven Wasserstoffatomen und
c) gegebenenfalls niedermolekularen Kettenverlängerungsmitteln
in Gegenwart von
d) Katalysatoren,
e) Treibmitteln,
f) Flammschutzmitteln,
sowie gegebenenfalls
g) Hilfsmitteln und/oder Zusatzstoffen,
dadurch gekennzeichnet, daß als Flammschutzmittel f) Melamin in Verbindung mit mindestens einem anionenaktiven Dispergiermittel eingesetzt wird.

2. Verfahren nach Anspruch 1, dadurch gekennzeichnet, daß als anionenaktive Dispergiermittel solche mit mindestens einer Sulfonat- und/oder Sulfatgruppe im Molekül eingesetzt werden.

3. Verfahren nach einem der Ansprüche 1 und 2, dadurch gekennzeichnet, daß als anionenaktive Dispergiermittel Diphenyloxid-Disulfonate mit Alkylgruppen zum Einsatz kommen.

4. Verfahren nach einem der Ansprüche 1 bis 3, dadurch gekennzeichnet, daß als anionenaktive Dispergiermittel Diphenyloxid-Disulfonate mit linearen oder verzweigten C₆- bis C₁₆-Alkylgruppen zum Einsatz kommen.

5. Verfahren nach einem der Ansprüche 1 und 2, dadurch gekennzeichnet, daß als anionenaktive Dispergiermittel sulfatierte Alkylphenylethoxylate und/oder deren Alkalisalze zum Einsatz kommen.

6. Verfahren nach Anspruch 1 oder 2, dadurch gekennzeichnet, daß als anionenaktive Dispergiermittel Gemische aus mindestens einem Diphenyloxid-Disulfonat mit Alkylgruppen und mindestens einem sulfatierten Alkylphenylethoxylat zum Einsatz kommen.

7. Verfahren nach einem der Ansprüche 1 bis 6, dadurch gekennzeichnet, daß die anionenaktiven Dispergiermittel in einer Menge von 0,1 bis 2 Gew.-%, bezogen auf die Summe der Komponenten b) bis g), zum Einsatz kommen.

8. Verfahren nach einem der Ansprüche 1 bis 7, dadurch gekennzeichnet, daß die anionenaktiven Dispergiermittel in einer Menge von 0,5 bis 2 Gew.-%, bezogen auf die Summe der Komponenten b) bis g), zum Einsatz kommen.

9. Verfahren nach einem der Ansprüche 1 bis 8, dadurch gekennzeichnet, daß die anionenaktiven Dispergiermittel in einer Menge von 0,5 bis 1 Gew.-%, bezogen auf die Summe der Komponenten b) bis g), zum Einsatz kommen.

10. Verfahren nach einem der Ansprüche 1 bis 9, dadurch gekennzeichnet, daß das Melamin in Verbindung mit mindestens einem anionenaktiven Dispergiermittel und mindestens einer organischen Säure und/oder deren Alkylester eingesetzt wird.

11. Verfahren nach Anspruch 10, dadurch gekennzeichnet, daß als organische Säuren 2- oder 3-wertige Säuren eingesetzt werden.

12. Verfahren nach Anspruch 10, dadurch gekennzeichnet, daß die organische Säure ausgewählt ist aus der Gruppe, enthaltend Malonsäure, Oxalsäure und Milchsäure.

13. Verfahren nach einem der Ansprüche 10 bis 12, dadurch gekennzeichnet, daß die organischen Säuren und/oder deren Ester in einer Menge von 0,001 bis 0,1 Gew.-%, bezogen auf die Summe der Komponenten b) bis g), zugesetzt werden.

14. Verfahren nach einem der Ansprüche 10 bis 13, dadurch gekennzeichnet, daß die organischen Säuren und/oder deren Ester in einer Menge von 0,03 bis 0,07 Gew.-%, bezogen auf die Summe der Komponenten b) bis g), eingesetzt werden.

15. Stabile Dispersion von Melamin in Polyetheralkoholen mit einem Gehalt an Melamin von 5 bis 50 Gew.-% und gegebenenfalls weiteren üblichen Zusätzen, dadurch gekennzeichnet, daß sie mindestens ein anionenaktives Dispergiermittel enthält.

16. Stabile Dispersion von Melamin in Polyetheralkoholen gemäß Anspruch 15, dadurch gekennzeichnet, daß sie mindestens ein anionenaktives Dispergiermittel und mindestens eine organische Säure und/oder deren Alkylester enthält.

17. Stabile Dispersion von Melamin in Polyetheralkoholen gemäß Anspruch 15 oder 16, dadurch gekennzeichnet, daß sie eine Kombination aus mindestens einem Diphenyloxid-Disulfonat mit Alkylgruppen, mindestens einem sulfatierten Alkylphenylethoxylat und mindestens einer organischen Säure bzw. deren Alkylester enthält.
